# EUROPÄISCHE PATENTSCHRIFT

(11) **EP 1 733 114 B1**
(45) Veröffentlichungstag und Bekanntmachung des Hinweises auf die Patenterteilung: **07.05.2008**
(21) Anmeldenummer: 05739995.8
(22) Anmeldetag: 24.03.2005
(51) Int. Cl.: E05F 11/48, E05F 15/16

(54) **TROMMELGEHÄUSE**
DRUM HOUSING
BOITIER DE TAMBOUR

(30) Priorität: 06.04.2004 DE 102004017322
(43) Veröffentlichungstag der Anmeldung: 20.12.2006
(73) Patentinhaber: Faurecia Innenraum Systeme GmbH, 76767 Hagenbach (DE)
(72) Erfinder: BRAUER, Hans-Georg, 34260 Kaufungen (DE); HUEGE, Carsten, 37287 Wehretal (DE); SCHLIWA, Enrico, 99819 Lauchroeden (DE); KOELLNER, Harald, 63674 Altenstadt (DE)
(74) Vertreter: Richardt, Markus Albert
(86) Internationale Anmeldenummer: PCT/EP2005/003194
(87) Internationale Veröffentlichungsnummer: WO 2005/098188

(56) Entgegenhaltungen:
- EP-A- 0 579 535
- EP-A- 0 724 060
- US-A1- 2002 007 596

## Beschreibung

Die vorliegende Erfindung betrifft ein Trommelgehäuse für ein Kraftfahrzeug sowie ein Türmodul und eine Hybridtür.

Aus der DE 3239370C2 ist eine Fahrzeugtür mit einem Türaußenblech bekannt, das einen Tragrahmen mit einer Aussparung für eine Fensterscheibe aufweist. Ein Aggregateträger nimmt die Türarmaturen wie Fensterscheibe, Fensterhebermechanismus und Türschloss auf, und wird getrennt vom Türaußenblech gefertigt, fertig montiert und am Türaußenblech anmontiert. Eine Türinnenverkleidung bildet den Abschluss der Fahrzeugtür zum Fahrzeuginnenraum und wird mit dem Aggregateträger oder dem Türaußenblech verbunden.

Aus der US-A-4,794,735 ist eine modulare Fahrzeugtür bekannt, die aus einer Türaußenhaut, einem Türmodul mit einem Türrahmen und einem Seitenaufprallschutz sowie einer Innenverkleidung zusammengesetzt ist. Auf dem Seitenaufprallschutz sind eine Antriebseinheit für einen Fensterheber sowie ein Türschlossmechanismus montiert.

Aus der EP-A-579535 ist eine Grundplatte bekannt, auf der von der Trockenraumseite her ein Türgriff, eine Innenverkleidung sowie ein Schalter für eine auf der Nassraumseite befestigte Fensterhebereinheit angeordnet ist. Die Fensterhebereinheit ist mit samt der Motor-Getriebe-Einheit auf der Nassraumseite der Grundplatte angeordnet, die von der Trockenraumseite vor die Öffnung an das Türinnenblech des Türkörpers geschraubt wird, sodass die Fahrzeugtür in einen außenliegenden Nassraum und einen innenliegenden Trockenraum geteilt wird. Die Aufteilung einer Fahrzeugtür in einen Nassraum und einen Trockenraum ist auch aus den EP-A-0944497 und EP-A-0961703B1 bekannt.

Aus der DE69421361T2 ist ferner ein Seilfensterheber mit vereinfachter, kinematischer Kette bekannt. Die Seiltrommel des Seilfensterhebers besteht aus zwei Teilen, die koaxial zueinander sind, und durch die Zungen des Gehäuses und einer Kante des Gehäuses aufeinandergesetzt sind, sodass sich beide Teile übereinander drehen können. Hierzu ist in dem Gehäuse eine kreisförmige Zahnstange vorgesehen. Die Zungen werden mit der Zahnstange in Eingriff gebracht und setzen ein Gehäuseteil in Bezug auf das andere Gehäuseteil in eine Richtung fest bzw. geben es in der entgegengesetzten Richtung frei.

Aus der DE 84 15 624 U1 ist ferner eine Fahrzeugtüre mit Fensterheber bekannt, bei der anstelle eines Hebearmantriebs auch ein Seil-oder Bowdenzug-Antrieb oder ein Gewindekabelantrieb realisiert werden kann, wobei das jeweilige Kraftübertragungsglied vom Motorantrieb einer Grundplatte ausgeht.

Ferner ist aus der DE 695 17 943 T2 ein Fensterheber eines Fahrzeugfensters bekannt, der Antriebsmittel umfasst, die zur Bewegung des Fahrzeugseitenfensters auf einen zusammengeschlossenen kinematischen Zug wirken, und wobei die besagten Antriebsmittel von Hand und elektrisch sind.

Weitere für Fensterheber geeignete Antriebsvorrichtungen sind aus den DE19706872A1, DE4139043A1 und DE4420692C2 bekannt.

Ein gemeinsamer Nachteil vorbekannter Türmodule ist, dass für die Serienfertigung von Kraftfahrzeugen zwei Varianten des Türmoduls hergestellt werden müssen, nämlich eine Variante für Fahrzeuge, die mit einem elektrischen Fensterheber ausgestattet sind, und eine weitere Variante für Fahrzeuge, die mit einem manuellen Fensterheber ausgestattet sind. Dies ist u. a. dadurch bedingt, dass die Seiltrommeln für die elektrischen und manuellen Fensterheberantriebe unterschiedlich groß sind.

Der Erfindung liegt demgegenüber die Aufgabe zu Grunde, ein verbessertes Trommelgehäuse zu schaffen, welches gleichermaßen für einen elektrischen und einen manuellen Fensterheberantrieb geeignet ist.

Die der Erfindung zu Grunde liegende Aufgabe wird mit den Merkmalen des Patentanspruchs 1 gelöst. Bevorzugte Ausführungsformen der Erfindung sind in den abhängigen Patentansprüchen angegeben.

Erfindungsgemäß ist das Trommelgehäuse zur wahlweisen Aufnahme einer Seiltrommel eines elektrischen oder eines manuellen Fensterheberantriebs ausgebildet. Hierzu ist der Aufnahmebereich des Trommelgehäuses so gestaltet, dass er einen ersten Bereich mit einem ersten Durchmesser und einen zweiten Bereich mit einem zweiten Durchmesser aufweist, wobei die beiden Teilbereiche des Aufnahmebereichs konzentrisch entlang der Drehachse der Seiltrommel angeordnet sind.

Nach einer bevorzugten Ausführungsform der Erfindung hat das Trägerteil eines Türmoduls, welches zur Aufnahme der Türarmaturen und Türaggregate dient, einen Aufnahmebereich wahlweise für die Seiltrommel eines elektrischen oder manuellen Fensterheberantriebs. Hierzu ist der Aufnahmebereich so gestaltet, dass er einen ersten Bereich mit einem großen Durchmesser und einen zweiten Bereich mit einem zweiten Durchmesser aufweist, wobei die beiden Teilbereiche des Aufnahmebereichs konzentrisch entlang der Drehachse der Seiltrommel angeordnet sind.

Der erste Bereich hat einen relativ großen Durchmesser wie er zur Aufnahme der Seiltrommel des elektrischen Fensterheberantriebs erforderlich ist. Dagegen erstreckt sich eine Seiltrommel für einen manuellen Fensterheberantrieb durch beide Teilbereiche.

Nach einer bevorzugten Ausführungsform der Erfindung ist der erste Bereich mit dem größeren Durchmesser vom Fahrzeuginnenraum her gesehen vor dem zweiten Bereich mit dem kleineren Durchmesser angeordnet. Dies ist insbesondere dann vorteilhaft, wenn das Trägerteil zur Unterteilung der Tür in einen Nass- und einen Trockenraum dient. In diesem Fall ist der erste Bereich zum Fahrzeuginnenraum hin, das heißt zum Trockenraum hin, angeordnet und der zweite Bereich zum Nassraum hin angeordnet.

Nach einer bevorzugten Ausführungsform der Erfindung hat der Aufnahmebereich für die Seiltrommel ein Seiltrommelgehäuse, welches eine bauliche Einheit mit dem Trägerteil bildet. Dies ist besonders vorteilhaft, wenn es sich bei dem Trägerteil um ein Kunststoff-Spritzgießteil handelt. In diesem Fall kann das Trägerteil mit dem integrierten Seiltrommelgehäuse in einem Arbeitsgang hergestellt werden. Die Montage eines separaten Seiltrommelgehäuses entfällt damit. Ein weiterer Vorteil ist, dass dadurch keine separate Dichtung gegenüber dem Trockenraum erforderlich ist, da das Seiltrommelgehäuse ja eine bauliche Einheit mit dem Trägerteil bildet. Aufgrund dessen kann das Eindringen von Feuchtigkeit von dem Nassraum in den Trockenraum in dem Bereich des Seiltrommelgehäuses sicher verhindert werden.

Nach einer weiteren bevorzugten Ausführungsform der Erfindung hat das Trägerteil Befestigungselemente sowohl für einen Motor des elektrischen Fensterheberantriebs als auch für ein Bremsgehäuse des manuellen Fensterheberantriebs. Dadurch kann dasselbe Türmodul sowohl für Fahrzeuge, die mit einem elektrischen Fensterheberantrieb ausgestattet werden und für Fahrzeuge, die mit einem manuellen Fensterheberantrieb ausgestattet werden, verwendet werden, und zwar auch dann, wenn der Motor des elektrischen Fensterheberantriebs und das Bremsgehäuse des manuellen Fensterheberantriebs unterschiedliche Befestigungspunkte an dem Trägerteil des Türmoduls haben.

Nach einer weiteren bevorzugten Ausführungsform der Erfindung hat der Aufnahmebereich ein Gegenlager für die Seiltrommel des manuellen Fensterheberantriebs. Vorzugsweise ist dieses Gegenlager als Gleitlager ausgebildet. Dieses kann auch als Zentrierung für die Kurbelachse des manuellen oder elektrischen Fensterheberantriebs dienen.

Nach einer weiteren bevorzugten Ausführungsform der Erfindung hat der erste Bereich für die Aufnahme der Seiltrommel des elektrischen Fensterheberantriebs einen Durchmesser zwischen 35 und 65 mm, vorzugsweise zwischen 40 und 60 mm, während der Durchmesser des zweiten Bereichs wesentlich kleiner ist, nämlich zwischen 20 und 40 mm, vorzugsweise zwischen 25 und 35 mm beträgt.

Nach einer weiteren bevorzugten Ausführungsform der Erfindung ist die Gesamtbauhöhe des Aufnahmebereichs mehr als doppelt so groß wie die Höhe des Bereichs für die Aufnahme nur der Seiltrommel für den elektrischen Fensterheber. Entsprechend wird die Seiltrommel für den elektrischen Fensterheber nur In dem Bereich mit dem größeren Durchmesser aufgenommen, während sich die Seiltrommel für den manuellen Fensterheberantrieb durch den ersten Bereich hin in den zweiten Bereich erstreckt. Dies korrespondiert mit den verschiedenen Höhen der Seiltrommeln für elektrische und manuelle Fensterheberantriebe.

Nach einer weiteren bevorzugten Ausführungsform der Erfindung wird das Trommelgehäuse als Teil einer sog. Hybridtür gefertigt. Hierbei wird das Trommelgehäuse durch Spritzguß oder Spritzprägung in die Tür eingebracht. Hybridtüren und deren Herstellung sind an sich aus dem Stand der Technik bekannt (vgl. https://plastics.bayer.de/AG/DE/technology/1013/59/index.jsp und http://dbindustrie.svhfi.securitas.net/Al/resources/2b53f848ad7.pdf). Die Erstellung eines Verbundkörpers aus Kunststoff- und Metallteilen mit einem durch Spritzgießen oder Extrusion erzeugten Formschluss zwischen den beiden Komponenten erlaubt die Herstellung von hoch belastbaren aber auch kostengünstigen Bauteilen.

Nach einer weiteren bevorzugten Ausführungsform der Erfindung handelt es sich bei dem Trommelgehäuse um eine separate Komponente, die beispielsweise mittels einer Schraubverbindung an dem Elektromotor des Fensterheberantriebs bzw. an einem Türinnenblech befestigt werden kann.

Im Weiteren wird eine bevorzugte Ausführungsform der Erfindung mit Bezugnahme auf die Zeichnungen näher erläutert. Es zeigen:
- Figur 1: eine Schnittansicht einer Ausführungsform eines erfindungsgemäßen Türmoduls mit einem elektrischen Fensterheberantrieb,
- Figur 2: das Türmodul der Figur 1 mit einem manuellen Fensterheberantrieb anstelle des elektrischen Fensterheberantriebs,
- Figur 3: eine Draufsicht auf die Trockenraumseite des Türmoduls,
- Figur 4: eine Draufsicht auf die Nassraumseite des Türmoduls.

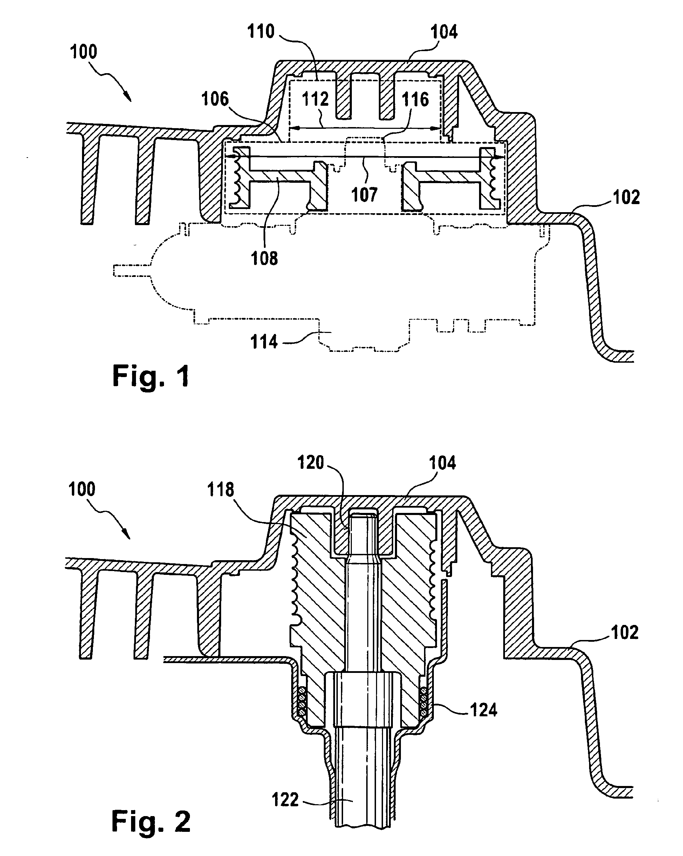

Die Figur 1 zeigt eine Teilschnittansicht eines Türmoduls 100 im Bereich des Fensterheberantriebs. Das Türmodul 100 hat ein Trägerteil 102 zur Aufnahme der Türaggregate und Türarmaturen, insbesondere des Fensterheberantriebs. Hierzu hat das Trägerteil 100 einen Aufnahmebereich für eine Seiltrommel des Fensterheberantriebs, wobei dieser Aufnahmebereich durch ein in das Trägerteil 102 integriertes Trommelgehäuse 104 gebildet wird, welches mit dem Trägerteil 102 eine bauliche Einheit bildet. Beispielsweise handelt es sich bei dem Trägerteil 102 mit dem Trommelgehäuse 104 um ein einziges Kunststoff-Spritzgussteil.

Der durch das Trommelgehäuse 104 abgeschlossene Aufnahmebereich für die Seiltrommel des Fensterheberantriebs hat einen Bereich 106, der durch die gestrichelte Linie in der Figur 1 dargestellt ist. Der Bereich 106 hat einen Durchmesser 107, der so gewählt ist, dass er für die Aufnahme einer Seiltrommel 108 eines elektrischen Fensterheberantriebs ausreichend ist. Beispielsweise beträgt der Durchmesser des Bereichs 106 35 bis 65 mm, vorzugsweise 40 bis 60 mm.

An den Bereich 106 schließt sich der Bereich 110 in dem Aufnahmebereich an, welcher ebenfalls durch eine gestrichelte Linie in der Fig. 1 dargestellt ist. Der Bereich 110 hat einen Durchmesser 112, der kleiner ist als der Durchmesser 107 des Bereichs 106. Der Durchmesser 112 ist so gewählt, dass er zur Aufnahme einer Seiltrommel für einen manuellen Fensterheberantrieb ausreichend ist.

In dem hier gezeigten Anwendungsfall wird das Türmodul 100 für ein Fahrzeug mit elektrischem Fensterheberantrieb verwendet. Entsprechend wird nur der Bereich 106 zur Aufnahme der Seiltrommel 108 des elektrischen Fensterheberantriebs genutzt. Der Antrieb der Seiltrommel 108 erfolgt durch einen Elektromotor 114, der an dem Trägerteil 102 befestigt ist.

Wenn ein Benutzer den Elektromotor 114 durch Betätigung beispielsweise eines Tastschalters einschaltet, so dreht sich die Seiltrommel 108 um die Achse 116, um das Antriebsseil zur Verstellung des Fensters auf der Seiltrommel 108 entweder auf- oder abzuwickeln, je nachdem ob eine Öffnung oder Schließung des Fensters gewünscht ist.

Die Figur 2 zeigt das Türmodul 100 zur Verwendung für ein Fahrzeug mit manuellem Fensterheberantrieb. In diesem Fall befindet sich in dem Aufnahmebereich eine Seiltrommel 118, die einen geringeren Durchmesser als die Seiltrommel 108 aufweist. Ferner hat die Seiltrommel 118 eine wesentlich größere Bauhöhe als die Seiltrommel 108, um trotz ihres geringeren Durchmessers die gleiche Seillänge zur Öffnung bzw. Schließung des Fensters auf- bzw. abwickeln zu können. Die Seiltrommel 118 füllt also im Wesentlichen den Bereich 110 mit dem geringeren Durchmesser aus und erstreckt sich durch den Bereich 106 mit dem größeren Durchmesser 107.

In dem Trommelgehäuse 104 ist ein Gleitlager 120 zur Aufnahme der Achse 122 des manuellen Fensterheberantriebs ausgebildet. Ferner ist das Bremsgehäuse 124 an dem Trägerteil 102 befestigt.

Aufgrund der Gestaltung des Aufnahmebereichs mit zwei Bereichen 106, 110, wird die Nutzung desselben Türmoduls 100 sowohl für Fahrzeuge mit manuellem als auch mit elektrischem Fensterheberantrieb ermöglicht.

Vorzugsweise hat das Trägerteil 102 ferner die Funktion, den Türinnenraum in einen Trockenraum und einen Nassraum zu unterteilen, wobei der Trockenraum durch eine vom Fahrzeuginnenraum her sichtbaren Türverkleidung begrenzt wird.

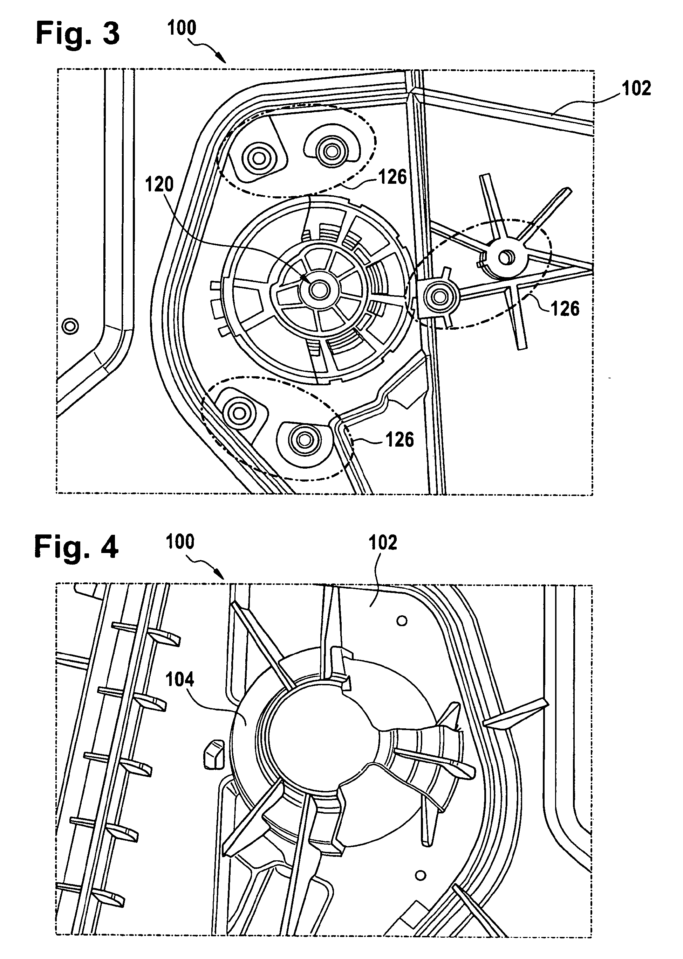

Die Figur 3 zeigt eine entsprechende Draufsicht auf das Trägerteil 102 von der Trockenraumseite, das heißt der Fahrzeug-Innenraumseite her. An dem Trägerteil 102 sind Befestigungselemente 126 angeordnet, die zur Befestigung des Elektromotors 114 bzw. des Bremsgehäuses 124 dienen. Aufgrund dessen kann das Türmodul 100 auch dann wahlweise für Fahrzeuge mit manuellem oder elektrischem Fensterheber eingesetzt werden, wenn der Elektromotor 114 (vgl. Figur 1) bzw. das Bremsgehäuse 124 (vgl. Figur 2) unterschiedliche Befestigungspunkte haben.

Die Figur 4 zeigt das Türmodul 100 in einer Draufsicht von der Nassraumseite her. Besonders vorteilhaft ist, dass das Trommelgehäuse 104 mit dem Trägerteil 102 eine bauliche Einheit bildet, sodass im Bereich des Trommelgehäuses 104 keine Feuchtigkeit von dem Nassraum in den Trockenraum übergehen kann. Dies hat weiter den Vorteil, dass ein separater Montageschritt zur Montage des Trommelgehäuses an dem Trägerteil entfallen kann. Ferner erübrigt sich die Anbringung einer Dichtung zwischen dem Trommelgehäuse und dem Trägerteil.

### Bezugszeichenliste

- 100: Türmodul
- 102: Trägerteil
- 104: Trommelgehäuse
- 106: Bereich
- 107: Durchmesser
- 108: Seiltrommel
- 110: Bereich
- 112: Durchmesser
- 114: Elektromotor
- 116: Achse
- 118: Seiltrommel
- 120: Gleitlager
- 122: Achse
- 124: Bremsgehäuse
- 126: Befestigungselement

## Patentansprüche

1. Trommelgehäuse für eine Seiltrommel eines Fensterhebers eines Kraftfahrzeugs,
**dadurch gekennzeichnet, dass**
das Trommelgehäuse einen Aufnahmebereich zur wahlweisen Aufnahme der Seiltrommel (108; 118) eines elektrischen oder manuellen Fensterheberantriebs aufweist, wobei der Aufnahmebereich einen ersten Bereich (106) mit einem ersten Durchmesser (107), der zur Aufnahme der Seiltrommel (108) für den elektrischen Fensterheber ausreichend ist, und einen zweiten Bereich (110) mit einem zweiten Durchmesser (112), der zur Aufnahme der Seiltrommel (118) für den manuellen Fensterheber ausreichend ist, aufweist, wobei die beiden Teilbereiche (106; 110) des Aufnahmebereichs konzentrisch zu der Drehachse der zur Aufnahme vorgesehenen Seiltrommel (108) sind, wobei der erste Durchmesser (107) größter ist als der zweite Durchmesser (112).

2. Trommelgehäuse nach Anspruch 1, wobei der erste Bereich (106) vom Fahrzeuginnenraum hergesehen vor dem zweiten Bereich (110) angeordnet ist.

3. Trommelgehäuse nach Anspruch 1 oder 2, mit Befestigungselementen (126) für einen Motor (114) des elektrischen Fensterheberantriebs und für ein Bremsgehäuse (124) des manuellen Fensterheberantriebs.

4. Trommelgehäuse nach einem der vorhergehenden Ansprüche, mit einem Gegenlager (120) für die Seiltrommel des manuellen Fensterheberantriebs.

5. Trommelgehäuse nach Anspruch 4, wobei es sich bei dem Gegenlager um ein Gleitlager (120) handelt.

6. Trommelgehäuse nach einem der vorhergehenden Ansprüche, wobei der erste Bereich (106) eine erste axiale Höhe entsprechend der Höhe der Seiltrommel (108) für den elektrischen Fensterheberantrieb aufweist und der zweite Bereich eine zweite axiale Höhe entsprechend der Höhe der Seiltrommel (118) für den manuellen Fensterheberantrieb aufweist, und die Summe der ersten und zweiten axialen Höhen mehr als das Doppelte der ersten axialen Höhe beträgt.

7. Türmodul mit einem Trommelgehäuse nach einem der vorigen Ansprüche 1 bis 6 für die Türe eines Kraftfahrzeugs mit einem am Türmodul vorgesehenen Trägerteil (102) mit einem Aufnahmebereich für das Trommelgehäuse.

8. Türmodul nach Anspruch 7, wobei das Trommelgehäuse (104) eine bauliche Einheit mit dem Trägerteil (102) bildet.

9. Türmodul nach Anspruch 7 oder 8, mit Befestigungselementen (126) für einen Motor (114) des elektrischen Fensterheberantriebs und für ein Bremsgehäuse (124) des manuellen Fensterheberantriebs.

10. Türmodul nach einem der vorhergehenden Ansprüche 7, 8 oder 9, wobei das Trägerteil (102) zur Unterteilung eines Türinnenraums in einen Nassraum und einen Trockenraum ausgebildet ist, und wobei der zweite Bereich (110) des Aufnahmebereichs zum Nassraum hin angeordnet ist.

11. Türmodul nach Anspruch 10, wobei das Trommelgehäuse (104) eine bauliche Einheit mit dem Trägerteil (102) bildet, wobei das Trommelgehäuse zur Trennung des Nassraums und des Trockenraums dient.

12. Hybridtür eines Kraftfahrzeugs mit einem Türmodul mit einem Trommelgehäuse nach einem der vorigen Ansprüche 1 bis 6.

## Claims

1. Drum housing for a cable drum of a window regulator of a motor vehicle,
**wherein**
the drum housing features a receptacle area for receiving cable drum (108; 118) of either an power or a manual window regulator drive, and wherein the receptacle area features a first area (106) with a first diameter (107), which is sufficient for receiving cable drum (108) for the power window regulator, and a second area (110) with a second diameter (112), which is sufficient for receiving cable drum (118) for the manual window regulator, where both areas (106; 110) of the receptacle area are concentric with the rotational axis of cable drum (108) intended to be received there, whereby first diameter (107) is greater than second diameter (112).

2. Drum housing as in Claim 1, whereby as seen from the inside of the vehicle, first area (106) is arranged before second area (110).

3. Drum housing as in Claim 1 or 2, with mounting elements (126) for a motor (114) of the power window regulator and for a brake housing (124) of the manual window regulator drive.

4. Drum housing as in one of the preceding claims with a counter bearing (120) for the cable drum of the manual window regulator drive.

5. Drum housing as in Claim 4, whereby said counter bearing is a sleeve bearing (120).

6. Drum housing as in one of the preceding claims, whereby first area (106) has a first axial height corresponding to the height of cable drum (108) for the power window regulator drive, and the second area has a second axial height corresponding to the height of cable drum (118) for the manual window regulator drive, and the sum of the first and the second axial height is more than two times the first axial height.

7. Door module with a drum housing according to one of the previous Claims 1 through 6 for the door of a motor vehicle with a mounting component (102) provisioned for in the door module, said mounting component having a receptacle area for a drum housing.

8. Door module as in Claim 7, whereby drum housing (104) forms a single assembly unit with mounting component (102).

9. Door module as in Claim 7 or 8, with mounting elements (126) for a motor (114) of the power window regulator drive and for a housing (124) of the manual window regulator drive.

10. Door module as in one of the previous Claims 7, 8, or 9, whereby mounting component (102) for separation of the inner space of the door into a wet and a dry chamber and wherein second area (110) of the receptacle area are arranged toward the wet chamber.

11. Door module as in Claim 10, whereby drum housing (104) forms a single assembly unit with mounting component (102), whereby the drum housing serves to separate the wet chamber from the dry chamber.

12. Hybrid door of a motor vehicle with a door module with a drum housing as in one of the previous Claims 1 through 6.

## Revendications

1. Boîtier de tambour pour un tambour à câble d'un lève-vitre d'un véhicule automobile,
**caractérisé en ce que**
le boîtier de tambour comporte une zone de réception pour le logement sélectif du tambour à câble (108 ; 118) d'un entraînement de lève-vitre électrique ou manuel, la zone de réception présentant une première zone (106) d'un premier diamètre (107), suffisant pour loger le tambour à câble (108) destiné au lève-vitre électrique, et une seconde zone (110) d'un second diamètre (112), suffisant pour loger le tambour à câble (118) destiné au lève-vitre manuel, les deux zones partielles (106 ; 110) de la zone de réception étant concentriques à l'axe de rotation du tambour à câble (108) prévu pour le logement, le premier diamètre (107) étant alors plus grand que le second diamètre (112).

2. Boîtier de tambour suivant la revendication 1, dans lequel la première zone (106), vue de l'habitacle du véhicule, est disposée en avant de la seconde zone (110).

3. Boîtier de tambour suivant l'une des revendications 1 et 2, comprenant des éléments de fixation (126) pour un moteur (114) de l'entraînement électrique du lève-vitre et pour un boîtier de frein (124) de l'entraînement manuel du lève-vitre.

4. Boîtier de tambour suivant l'une des revendications précédentes, comprenant un palier-support (120) pour le tambour à câble de l'entraînement manuel du lève-vitre.

5. Boîtier de tambour suivant la revendication 4, dans lequel le palier-support est un palier lisse (120).

6. Boîtier de tambour suivant l'une des revendications précédentes, dans lequel la première zone (106) présente une hauteur axiale correspondante à la hauteur du tambour à câble (108) pour l'entraînement électrique du lève-vitre et la seconde zone présente une seconde hauteur axiale correspondante à la hauteur du tambour à câble (118) pour l'entraînement manuel du lève-vitre, et la somme de la première et de la seconde hauteur axiale équivaut à plus du double de la première hauteur axiale.

7. Module de porte comprenant un boîtier de tambour pour les portes d'un véhicule automobile avec un élément porteur (102), prévu sur le module de porte, avec une zone de réception pour le boîtier de tambour suivant l'une des revendications précédentes 1 à 6.

8. Module de porte suivant la revendication 7, dans lequel le boîtier de tambour (104) forme une unité de construction avec l'élément porteur (102).

9. Module de porte suivant l'une des revendications 7 et 8, comprenant des éléments de fixation (126) pour un moteur (114) de l'entraînement électrique du lève-vitre et pour un boîtier de frein (124) de l'entraînement manuel du lève-vitre.

10. Module de porte suivant l'une des revendications précédentes 7, 8 et 9, dans lequel l'élément porteur (102) est réalisé pour la subdivision d'un espace intérieur de porte en un espace humide et en un espace sec, et la seconde zone (110) de la zone de réception est disposée en direction de l'espace humide.

11. Module de porte suivant la revendication 10, dans lequel le boîtier de tambour (104) forme une unité de construction avec l'élément porteur (102), le boîtier de tambour servant à la séparation de l'espace humide et de l'espace sec.

12. Porte hybride d'un véhicule automobile comprenant un module de porte avec un boîtier de tambour suivant l'une des revendications précédentes 1 à 6.
